# EUROPÄISCHE PATENTANMELDUNG

(11) **EP 0 790 161 A2**
(43) Veröffentlichungstag der Anmeldung: **20.08.1997**
(21) Anmeldenummer: 97100914.7
(22) Anmeldetag: 22.01.1997
(51) Int. Cl.: B60R 25/04, B60R 25/00

(54) **Verfahren und Vorrichtung zur Diebstahlsicherung eines Kraftfahrzeuges**

(30) Priorität: 19.02.1996 DE 19605880
(71) Anmelder: Volkswagen Aktiengesellschaft, 38436 Wolfsburg (DE)
(72) Erfinder: Havemann, Jörg, 29389 Bodenteich (DE); Böckmann, Ingo, Dipl.-Ing., 38551 Ribbesbüttel (DE)

(57) **Zusammenfassung**

Es wird ein Verfahren zur Diebstahlsicherung eines Kraftfahrzeuges, bei dem eine im Kraftfahrzeug (1) angeordnete Informationsauswerteinrichtung (2) in Abhängigkeit von auf einem mobilen Datenträger (4) abgespeicherten Informationsdaten (I) Steuersignale (S1 bis S4) an mindestens ein Bauteil (5a bis 5c, 6) des Kraftfahrzeuges sendet, wobei die Informationsdaten Daten (I1) zur Beschränkung des Betriebes des Kraftfahrzeuges enthalten, sowie eine entsprechende Vorrichtung beschrieben.

Um ein Benutzen des Kraftfahrzeuges durch eine unbefugte Person auch dann zu verhindern, wenn diese in Besitz des mobilen Datenträgers (4) gelangt, ist erfindungsgemäß vorgesehen, daß die Daten (I1) zur Beschränkung des Betriebes des Kraftfahrzeuges (1) in einer Ladestation (3,9) nach dem Einführen des mobilen Datenträgers (4) die Ladestation durch einen berechtigten Benutzer verändert und/oder aktualisiert werden können.

## Beschreibung

Die Erfindung betrifft ein Verfahren zur Diebstahlsicherung eines Kraftfahrzeuges, bei dem eine im Kraftfahrzeug angeordnete Informationsauswerteeinrichtung in Abhängigkeit von auf einem mobilen Datenträger abgespeicherten Informationsdaten Steuersignale an mindestens ein Bauteil des Kraftfahrzeuges sendet, wobei die Informationsdaten Daten zur Beschränkung des Betriebes Kraftfahrzeuges enthalten, sowie eine Vorrichtung zur Durchführung des Verfahrens.

Eine Start-, Betriebs- und Kontrolleinheit für Kraftfahrzeuge ist aus der deutschen Offenlegungsschrift DE 33 08 803 A1 bekannt, bei der über einen auf einer Identitätskarte abgespeicherten Code die Einschaltung und Aufrechterhaltung der Betriebs- und Fahrbereitschaft, für die Verkehrssicherheit dienende Geschwindigkeitsregulierungen sowie Identifizierungsaufgaben im Zusammenhang mit Diebstahlschutz durchgeführt werden. Der Code der Identitätskarte enthält speziell auf das Fahrzeug abgestimmte Daten, z. B. die Fahrgestell- und Fahrzeugbriefnummer sowie Daten des Kfz.-Zulassungsscheins. Bei Verlust der Identitätskarte darf sinnvollerweise nur eine autorisierte Institution nach Vorlage des Kraftfahrzeugbriefes oder eines sonstigen Eigentumnachweises eine neue Karte aufstellen.

In der deutschen Offenlegungsschrift DE 43 33 586 A1 ist eine elektronische Diebstahlsicherung für Kraftfahrzeuge, die ein durch eine elektronische Steuereinrichtung gesteuertes Antriebssystem aufweist, beschrieben. Die Vorrichtung besteht aus einer Chipkarte mit Mikroprozessor und einem Chipkartenleser und -schreiber, der mit einem Bordcomputer verbunden ist. Der Mikroprozessor verarbeitet vom Chipkartenleser und -schreiber erhaltene Informationen zu Betriebsdaten für das Starten des Kraftfahrzeuges und liefert sie über den Chipkartenleser und -schreiber zum Bordcomputer, so daß das Kraftfahrzeug gestartet werden kann. Solche Betriebsdaten sind beispielsweise die Gemischzusammensetzung oder die Zündfolge. Der Vorteil einer solchen Diebstahlsicherung besteht darin, daß eine unbefugte Person nicht einfach durch Überwinden einer Verriegelung das Kraftfahrzeug starten kann, da für den Startvorgang ein Datenaustausch und eine Verarbeitung von Informationen in Betriebsdaten für den Kraftfahrzeugantrieb erforderlich sind.

Die bekannten Lösungen haben jedoch den Nachteil, daß eine unbefugte Person das Kraftfahrzeug starten und auch benutzen kann, wenn sie in den Besitz der zum Kraftfahrzeug gehörenden Chip- oder Codekarte gelangt.

Dementsprechend besteht die Aufgabe der Erfindung darin, ein Verfahren zur Diebstahlsicherung eines Kraftfahrzeuges, das ein Benutzen des Kraftfahrzeuges durch eine unbefugte Person auch dann verhindert, wenn diese in Besitz des mobilen Datenträgers gelangt, sowie eine entsprechende Vorrichtung zu schaffen.

Die Aufgabe wird durch ein Verfahren mit den Merkmalen des Patentanspruchs 1 sowie durch eine Vorrichtung mit den Merkmalen des Patentanspruchs 12 gelöst. Vorteilhafte Aus- und Weiterbildungen sind in den Unteransprüche dargestellt.

Gemäß der Erfindung können die auf dem mobilen Datenträger abgespeicherten Daten zur Beschränkung des Betriebes des Kraftfahrzeuges in einer Ladestation, welche sich sowohl im Kraftfahrzeug, als auch außerhalb des Kraftfahrzeuges befinden kann, nach dem Einführen des mobilen Datenträgers in die Ladestation durch den berechtigten Benutzer verändert und/oder aktualisiert werden. Eine solche Beschränkung könnte beispielsweise zeitlicher Natur sein. Eine leicht zu realisierende Beschränkung besteht beispielsweise in der Limitierung der möglichen Starts. Ist die Anzahl der genehmigten Starts verbraucht, kann der berechtigte Benutzer in der Ladestation den mobilen Datenträger wieder auffüllen.

Eine andere Möglichkeit besteht in einer örtlichen Beschränkung des Betriebes. Verfügt das Kraftfahrzeug über ein Navigationssystem mit einer abgespeicherten digitalen Straßenkarte und einer Positionserfassungseinrichtung, läßt sich die Benutzung beispielsweise auf einen bestimmten Bewegungsradius oder die Fahrt zur Arbeitsstätte einschränken. Die das Kraftfahrzeug entwendende Person kann also niemals sicher sein, in Abhängigkeit welcher Beschränkung der Betrieb des Kraftfahrzeuges gesteuert wird und wann diese Beschränkung erreicht ist.

Die Ladestation, in welche der mobile Datenträger zur Veränderung bzw. Aktualisierung der Daten eingeführt wird, kann sowohl eine fahrzeugeigene oder eine fahrzeugunabhängige Ladestation sein. Vorzugsweise ist diese Ladestation mit einer zentralen Einheit, beispielsweise eines mobilen Funknetzes, über einen Datenkanal verbunden. Die Veränderung und/oder Aktualisierung der auf dem mobilen Datenträger gespeicherten Daten zur Beschränkung des Betriebes des Kraftfahrzeuges ist vorteilhafterweise nur bei Eingabe eines Berechtigungscodes möglich, welcher mit einem auf dem mobilen Datenträger abgespeicherten, extern nicht auslesbaren Identifizierungscode in der Ladestation verglichen wird. Bei Übereinstimmung von Berechtigungs- und Identifizierungscode kann die Aktualisierung oder Veränderung der auf dem mobilen Datenträger abgespeicherten Daten zur Beschränkung des Betriebes des Kraftfahrzeuges vorgenommen werden. Ist die Ladestation mit einer zentralen Einheit verbunden, kann der Identifizierungscode auch in dieser abgespeichert sein.

Der mobile Datenträger ist jeweils für ein bestimmtes Kraftfahrzeug vorgesehen. Zur Realisierung dieser Vorgabe ist vorzugsweise auf dem mobilen Datenträger ein fahrzeugspezifischer Identifizierungscode nicht auslesbar abgespeichert. Dieser wird beim Einführen des mobilen Datenträgers in eine entsprechende Lese- und Schreibeinrichtung des Kraftfahrzeuges mit einem in der Informationsauswerteeinrichtung des Kraftfahrzeuges abgelegten Vergleichscode verglichen. Ist der Vergleich positiv, d. h. fahrzeugspezifische Identifizierungscode und Vergleichscode stimmen überein, sendet die Informationsauswerteeinrichtung in Abhängigkeit der auf dem mobilen Datenträger abgespeicherten Informationsdaten Steuersignale an mindestens ein Bauteil des Kraftfahrzeuges.

Nach einer bevorzugten Ausbildung der Erfindung ist die Beschränkung des Betriebes des Kraftfahrzeuges vom berechtigten Benutzer frei wählbar. Er kann also selbst entscheiden, ob er eine zeitliche oder eine örtliche Beschränkung des Betriebes des Kraftfahrzeuges wählt und in welchem Umfang.

Aus Gründen der Sicherheit des berechtigten Benutzers ist nach einer Ausbildung der Erfindung vorgesehen, daß kurz vor dem Erreichen der Beschränkung auf einer Anzeigeeinrichtung ein Hinweis, daß die Beschränkung in Kürze erreicht wird, dargestellt wird.

Wird während des Betriebes des Kraftfahrzeuges die durch die auf dem mobilen Datenträger gespeicherten Daten festgelegte Beschränkung erreicht, wird einmal von der Informationsauswerteeinrichtung an mindestens ein Baute beispielsweise das Motorsteuergerät, ein Steuersignal zur Stillegung, vorzugsweise stufenweisen Stillegung, des Kraftfahrzeuges gesendet. Gleichzeitig ist denkbar, daß von der Informationsauswerteeinrichtung an mindestens ein Bauteil (z. B. Warnblinkanlage oder Alarmanlage) ein Signal zur Auslösung eines optischen oder akustischen Warnsignals gesendet wird.

Ist die Informationsauswerteeinrichtung über einen Datenkanal mit einer außerhalb des Kraftfahrzeugs befindlichen Einrichtung verbindbar, kann auch vorgesehen sein, daß die Informationsauswerteeinrichtung ein Warnsignal, vorzugsweise mit einer Information über den Standort des Kraftfahrzeuges, an diese Einrichtung oder über diese Einrichtung an eine weitere dezentrale Einrichtung sendet. Dies kann sowohl die zentrale Einrichtung eines Mobilfunknetzes als auch die nächstliegende Polizeistation oder die in der Nähe befindlichen Einsatzwagen der Polizei sein.

Nachfolgend soll die Erfindung anhand von Ausführungsbeispielen näher beschrieben werden. Die zugehörige Figur zeigt eine schematische Darstellung einer Diebstahlsicherung nach dem erfindungsgemäßen Verfahren.

Das zu sichernde Kraftfahrzeug 1 weist eine Informationsauswerteeinrichtung 2 auf, welche mit einer Schreib- und Leseeinrichtung 3 für den mobilen Datenträger 4, beispielsweise einer Chipkarte verbunden ist. Auf der Chipkarte 4 ist ein fahrzeugspezifischer Identitätscode C1, der die Chipkarte dem Kraftfahrzeug 1 zuordnet, sowie verschiedene Informationsdaten I für den Betrieb des Kraftfahrzeuges gespeichert. Nach der Erfindung enthalten diese Informationsdaten Daten I1 zur Beschränkung des Betriebes des Kraftfahrzeuges. Nach dem Einführen der Chipkarte 4 in die Schreib- und Leseeinrichtung 3 wird in einem ersten Schritt der fahrzeugspezifische Identitätscode C1 der Informationsauswerteeinrichtung 2 übergeben. Diese vergleicht den Identitätscode C1 mit einem abgelegten fahrzeugspezifischen Vergleichscode C3. Stimmen Identitäts- und Vergleichscode überein, erfolgt einem weiteren Schritt die Übergabe der Informationsdaten I mit den Daten I1 für die Beschränkung des Betriebes des Kraftfahrzeuges an die Informationsauswerteeinrichtung 2. Für die Beschränkung des Betriebes des Kraftfahrzeuges stehen die unterschiedlichsten Möglichkeiten zur Verfügung. Eine Variante besteht in der Limitierung der zugelassenen Starts, in eine Fahrkilometerbegrenzung einer Vorgabe eines Zeitrahmens in dem Kraftfahrzeug betrieben werden kann oder der Vorgabe eines Bewegungsradiuses. Aber auch andere Beschränkungsmöglichkeiten sind denkbar.

In Abhängigkeit der Informationsdaten I sendet die Informationsauswerteeinrichtung zwei Steuersignale S1 bis S3 an verschiedene Bauteile 5a bis 5c des Kraftfahrzeuges. Als Beispiel sollen hier die Zündeinrichtung 5a, das Motorsteuergerät 5b und das Getriebesteuergerät 5c angegeben werden. Ist die durch die Daten I1 vorgegebene Beschränkung des Betriebes noch nicht erreicht, sendet die Informationsauswerteeinrichtung zwei Steuersignale S1 bis S3 zur Inbetriebnahme des Kraftfahrzeuges an die Bauteile 5a bis 5c. Bei Überschreitung der vorgegebenen Beschränkung kann das Kraftfahrzeug nicht gestartet werden. Erfolgt während des Betriebes des Kraftfahrzeuges eine Überschreitung der Beschränkung, wird das Kraftfahrzeug von der Informationsauswerteeinrichtung 2 über die Steuersignale S1 bis S3 stillgelegt und an das Bauteil 6 (z. B. Warnblinkanlage, Alarmanlage) ein Signal S4 zur Auslösung eines Warnsignals W1 gesendet. Außerdem wird über den Datenkanal 7 an die zentrale Einrichtung 8 eines Mobilfunknetzes ein weiteres Warnsignal W2, welches den Standort des Kraftfahrzeuges im Straßennetz beinhaltet, abgegeben.

Zur Veränderung bzw. Aktualisierung der Daten I1 zur Beschränkung des Betriebes des Kraftfahrzeuges sind außerhalb des Kraftfahrzeuges Ladestationen 9 vorgesehen. Diese können an den unterschiedlichsten Orten angeordnet werden, beispielsweise an Tankstellen oder auch im PC zu Hause. Diese Ladestationen kommunizieren mit einer zentralen Einrichtung. Im Ausführungsbeispiel ist dies die Einrichtung 8 des Mobilfunknetzes. Nach dem Einführen der Chipkarte 4 in die jeweilige Ladestation 9 gibt der Benutzers des Kraftfahrzeuges einen Berechtigungscode C2 über eine Eingabeeinrichtung 10 ein, welcher mit einem Identifizierungscode, der sowohl auf der Chipkarte 4 als auch in der zentralen Einrichtung 8 abgespeichert sein kann, verglichen wird. Bei Übereinstimmung von Berechtigungscode C2 und Identifizierungscode C4 erhält der nun berechtigte Benutzer die Möglichkeit die Chipkarte 4 "aufzutanken", in dem er die Daten I1 der Beschränkung des Betriebes des Kraftfahrzeuges verändert bzw. aktualisiert.

Des weiteren kann vorgesehen sein, daß die Schreib- und Leseeinrichtung 3 des Kraftfahrzeuges als Ladestation 9 dient. In diesem Fall ist der Identifzierungscode mit dem der Berechtigungscode C2 des berechtigten Benutzers verglichen wird, entweder in der Informationsauswerteeinrichtung 2 oder der mit ihr kommunizierenden zentralen Einrichtung 8 abgespeichert. Beide Anordnungen der Ladestation 9 können sowohl einzeln als auch in Kombination benutzt werden.

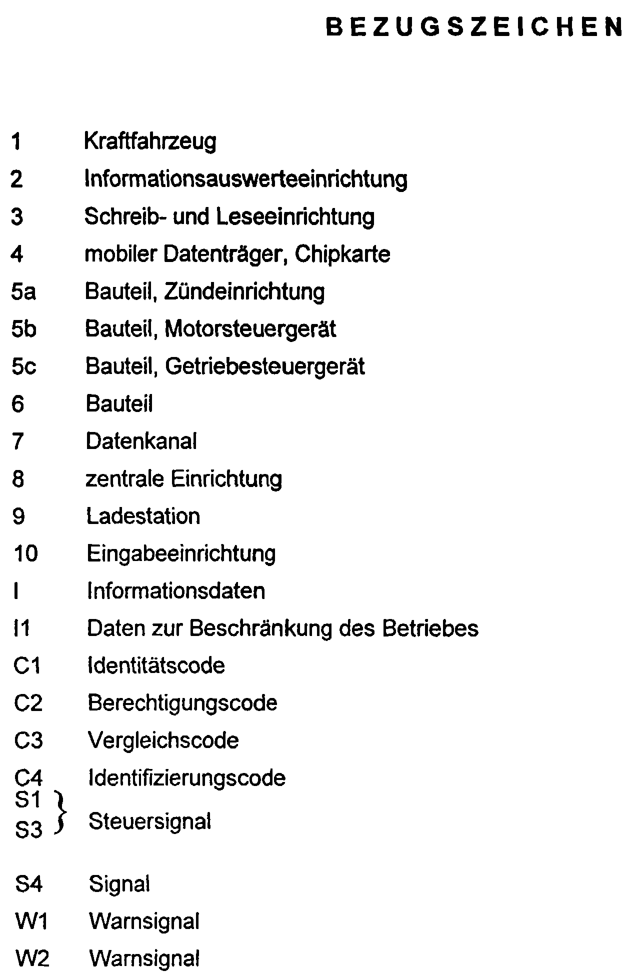

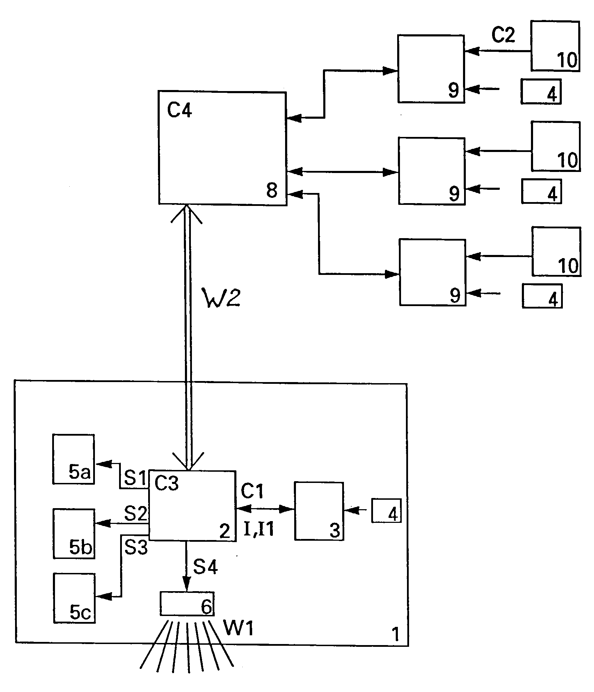

## Patentansprüche

1. Verfahren zur Diebstahlsicherung eines Kraftfahrzeuges, bei dem eine im Kraftfahrzeug angeordnete Informationsauswerteeinrichtung (2) in Abhängigkeit von auf einem mobilen Datenträger (4) abgespeicherten Informationsdaten (I) Steuersignale (S1 - S4) an mindestens ein Baute (5a - 5c, 6) des Kraftfahrzeuges sendet, wobei die Informationsdaten (I) Daten (I1) zur Beschränkung des Betriebes des Kraftfahrzeuges enthalten, dadurch gekennzeichnet, daß die Daten (I1) zur Beschränkung des Betriebes des Kraftfahrzeuges (1) in einer Ladestation (3,9) nach dem Einführen des mobilen Datenträgers (4) in die Ladestation durch einen berechtigten Benutzer verändert und/oder aktualisiert werden können.

2. Verfahren nach Anspruch 1, dadurch gekennzeichnet, daß die Veränderung und/oder die Aktualisierung der auf dem mobilen Datenträger (4) gespeicherten Daten (I1) zur Beschränkung des Betriebes des Kraftfahrzeuges (1) bei Eingabe eines Berechtigungscodes (C2) erfolgt.

3. Verfahren nach Anspruch 2, dadurch gekennzeichnet, daß der eingegebene Berechtigungscode (C2) mit einem auf dem mobilen Datenträger (4) oder in einer zentralen Einrichtung (8) abgespeicherten Identifizierungscode (C4) in der Ladestation (3,9) verglichen wird und bei Übereinstimmung von Berechtigungs- und Identifzierungscode die Aktualisierung der Daten (I1) zur Beschränkung des Betriebes des Kraftfahrzeuges (1) vorgenommen wird.

4. Verfahren nach einem der Ansprüche 1 bis 3, dadurch gekennzeichnet, daß der mobile Datenträger (4) einen fahrzeugspezifischen Identitätscode (C1) aufweist, welcher mit einem in der Informationsauswerteeinrichtung (2) des Kraftfahrzeuges abgelegten fahrzeugspezifischen Vergleichscode (C3) verglichen wird und die Informationsauswerteeinrichtung (2) nur bei Übereinstimmung von fahrzeugspezifischen Identifizierungs- und fahrzeugspezifischen Vergleichscode Steuersignale (S1 bis S4) an mindestens ein Bauteil (5a bis 5c, 6) des Kraftfahrzeuges (1) sendet.

5. Verfahren nach einem der Ansprüche 1 bis 4, dadurch gekennzeichnet, daß die auf dem mobilen Datenträger (4) abgespeicherten Informationsdaten (I) Daten (I1) zur zeitlichen und/oder örtlichen Beschränkung des Betriebes des Kraftfahrzeuges (1) enthalten.

6. Verfahren nach einem der Ansprüche 1 bis 5, dadurch gekennzeichnet, daß die Beschränkung des Betriebes des Kraftfahrzeuges (1) von einem berechtigten Benutzer frei wählbar ist.

7. Verfahren nach einem der Ansprüche 1 bis 6, dadurch gekennzeichnet, daß bei Überschreitung der durch die auf dem mobilen Datenträger (4) gespeicherten Daten (I1) festgelegten Beschränkung des Betriebes des Kraftfahrzeuges die Informationsauswerteeinrichtung (2) an mindestens ein Bauteil (5a bis 5c) des Kraftfahrzeuges (1) ein Steuersignal (S1 bis S3) zur Stillegung des Kraftfahrzeuges sendet.

8. Verfahren nach Anspruch 7, dadurch gekennzeichnet, daß die Stillegung des Kraftfahrzeuges (1) stufenweise erfolgt.

9. Verfahren nach einem der Ansprüche 1 bis 8, dadurch gekennzeichnet, daß bei Überschreitung der durch die auf dem mobilen Datenträger (4) abgespeicherten Daten (I1) festgelegten Beschränkung die Informationsauswerteeinrichtung (2) an mindestens ein Bauteil (6) des Kraftfahrzeuges (1) ein Signal zur Auslösung eines Warnsignals (W1) sendet.

10. Verfahren nach einem der Ansprüche 1 bis 9, dadurch gekennzeichnet, daß bei Überschreitung der durch die auf dem mobilen Datenträger (4) abgespeicherten Daten (I1) festgelegten Beschränkung des Betriebes des Kraftfahrzeuges (1) von der Informationsauswerteeinrichtung (2) über einen Datenkanal (7) an eine außerhalb des Kraftfahrzeuges (1) befindliche Einrichtung (8) ein Warnsignal (W2) gesendet wird.

11. Verfahren nach Anspruch 10, dadurch gekennzeichnet, daß das Warnsignal (W2) eine Information über die Position des Kraftfahrzeuges (1) enthält.

12. Vorrichtung zur Diebstahlsicherung in einem Kraftfahrzeug, mit einer Informationsauswerteeinrichtung (2), welche in Abhängigkeit von auf einem mobilen Datenträger (4) abgespeicherten Informationsdaten (I) Steuersignale (S1 bis S4) an mindestens ein Bauteil (5a bis 5c, 6) des Kraftfahrzeuges sendet, wobei die Informationsdaten (I) Daten (I1) zur Beschränkung des Betriebes des Kraftfahrzeuges enthalten, dadurch gekennzeichnet, daß eine fahrzeugeigene oder eine fahrzeugunabhängige Ladestation (3, 9) vorgesehen ist, in welcher die Daten (I1) zur Beschränkung des Betriebes des Kraftfahrzeuges (1) nach dem Einführen des mobilen Datenträgers (4) in die Ladestation durch einen berechtigten Benutzer veränderbar oder aktualisierbar sind.

13. Vorrichtung nach Anspruch 12, dadurch gekennzeichnet, daß die Ladestation (3, 9) mit einer zentralen Einheit (8) kommunizierbar ausgebildet ist.

14. Vorrichtung nach Anspruch 12 oder 13, dadurch gekennzeichnet, daß die Veränderung und/oder die Aktualisierung der auf dem mobilen Datenträger (4) gespeicherten Daten (I1) zur Beschränkung des Betriebes des Kraftfahrzeuges (1) nach Eingabe eines Berechtigungscodes (C2) in die Ladestation (3, 9) durchführbar ist.

15. Vorrichtung nach Anspruch 14, dadurch gekennzeichnet, daß die Ladestation (3, 9) eine Vergleichseinrichtung aufweist, in welcher der eingegebene Berechtigungscode (C2) mit einem auf dem mobilen Datenträger (4), in der Ladestation (3, 9) oder in der zentralen Einrichtung (8) abgespeicherten Indentifizierungscode (C4) vergleichbar ist und bei Übereinstimmung von Berechtigungs- und Identifizierungscode die Veränderung oder die Aktualisierung der Daten (I1) zur Beschränkung des Betriebes des Kraftfahrzeuges (1) auf dem mobilen Datenträger (4) durchführbar ist.

16. Vorrichtung nach einem der Ansprüche 12 bis 15, dadurch gekennzeichnet, daß der mobile Datenträger (4) einen fahrzeugspezifischen Identitätscode (C1) aufweist, welcher mit einem in der Informationsauswerteeinrichtung (2) abgelegten fahrzeugspezifischen Vergleichscode (C3) vergleichbar ist, wobei nur bei Übereinstimmung von Identifizierungs- und Vergleichscode die Informationsauswerteeinrichtung (2) Steuersignale (S1 bis S4) an mindestens ein Bauteil (5a bis 5c, 6) des Kraftfahrzeuges (1) sendet.

17. Vorrichtung nach einem der Ansprüche 12 bis 16, dadurch gekennzeichnet, daß die auf dem mobilen Datenträger (4) abgespeicherten Informationsdaten (I) Daten (I1) zur zeitlichen und/oder örtlichen Beschränkung des Betriebes des Kraftfahrzeuges (1) enthalten.

18. Vorrichtung nach einem der Ansprüche 12 bis 17, dadurch gekennzeichnet, daß die Beschränkung des Betriebes des Kraftfahrzeuges (1) von einem berechtigten Benutzer frei wählbar ist.

19. Vorrichtung nach einem der Ansprüche 12 bis 18, dadurch gekennzeichnet, daß die Informationsauswerteeinrichtung (2) derart ausgebildet ist, daß sie bei Überschreitung der durch die auf dem mobilen Datenträger (4) gespeicherten Daten (I1) festgelegten Beschränkung des Betriebes des Kraftfahrzeuges an mindestens eines der Bauteile (5a bis 5c) des Kraftfahrzeuges ein Steuersignal (S1 bis S3) zur Stillegung des Kraftfahrzeuges sendet.

20. Vorrichtung nach einem der Ansprüche 12 bis 20, dadurch gekennzeichnet, daß die Informationsauswerteeinrichtung (2) derart ausgebildet ist, daß sie bei Überschreitung der durch die Daten (I1) festgelegten Beschränkung ein Warnsignal an ein Bauteil (6) des Kraftfahrzeuges und/oder die zentrale Einrichtung (8) sendet.
